# EUROPEAN PATENT SPECIFICATION

(11) **EP 1 562 170 B1**
(45) Date of publication and mention of the grant of the patent: **19.11.2008**
(21) Application number: 04723725.0
(22) Date of filing: 26.03.2004
(51) Int. Cl.: G09G 3/36, G09G 3/34, G09G 3/20, G02F 1/133

(54) **DISPLAY DEVICE ADJUSTING METHOD AND DISPLAY DEVICE**
ANZEIGEBAUELEMENT-EINSTELLVERFAHREN UND ANZEIGEBAUELEMENT
PROCEDE POUR AJUSTER UN DISPOSITIF D'AFFICHAGE ET DISPOSITIF D'AFFICHAGE

(30) Priority: 01.04.2003 JP 2003098488
(43) Date of publication of application: 10.08.2005
(73) Proprietor: Hunet Display Technology Inc., Chuo-ku, Tokyo 104-0028 (JP)
(72) Inventor: OZAKI, Yutaka, Tsuchiura-shi, Ibaraki 300-0832 (JP)
(74) Representative: Engelhard, Maximilian
(86) International application number: PCT/JP2004/004291
(87) International publication number: WO 2004/090856

(56) References cited:
- JP-A- 9 292 601
- JP-A- 2000 111 871
- JP-A- 2002 117 999
- JP-A- 2003 029 235
- JP-A- 2004 086 081
- US-A- 5 724 062
- US-A- 6 069 676
- US-A1- 2002 113 192
- US-A1- 2003 011 559
- PATENT ABSTRACTS OF JAPAN -& JP 2000 111871 A (CANON INC.), 21 April 2000 (2000-04-21)

## Description

### Technical Field

The present invention relates to an adjustment method of a display device particularly having LEDs (Light-Emitting Diode) of three primary colors, R, G, B, and the display device.

### Background Art

Conventionally, as a liquid crystal display device using LEDs of three primary colors, R(red)-G(green)-B(blue), liquid crystal display devices of field sequential system (hereinafter, referred to as an FS system) have been implemented, for example, as disclosed in JP 2000-241811. In the FS-system liquid crystal display device, three-color LEDs are provided on the back surface of a liquid crystal shutter, each of the LEDs is sequentially lighted at high speed while opening and closing the liquid crystal shutter at each pixel position to be synchronized with lighting of the LEDs, and thereby, a desired color can be displayed at each pixel position.

For example, in the case of displaying red, the liquid crystal shutter is opened during a period of time a red LED emits light, and then closed during a period of time a green LED emits light and a period of time a blue LED emits light. The case of displaying green or blue is the same, and the liquid crystal shutter is opened only during a period of time the LED of desired color emits light, and closed during periods of time the other LEDs emit light.

Further, opening the liquid crystal shutter for periods during which red and green LEDs emit light enables Y (Yellow) to be displayed, opening the liquid crystal shutter for periods during which red and blue LEDs emit light enables M (Magenta) to be displayed, opening the liquid crystal shutter for periods during which green and blue LEDs emit light enables C (Cyan) to be displayed, and opening the liquid crystal shutter for all the periods during which red, green and blue LEDs emit light enables W (White) to be displayed.

In such an FS system, by lighting three-color LEDs sequentially at speed higher than human visual reaction speed, color display is implemented by additive color process. Then, adopting the FS system eliminates the need of color filter, and enables sharpened color display to be performed.

However, it is inevitable that an LED of each of colors, R, G, B, has a few fluctuations in emission wavelength with products due to fluctuations in products when manufactured, and as a result, complicated operation is required to achieve the desired white balance. For example, a method is used of making a fine adjustment to resistance or the like of an LED of each color assembled into a display device, or of selecting an LED of each color such that the desired white balance is achieved, but there arises a problem that the operation requires some effort.

US-A-2003/0011559 discloses a liquid crystal display device and manufacturing method thereof. The liquid crystal display device includes a liquid crystal display panel having a first substrate, a second substrate, a liquid crystal disposed between the first substrate and the second substrate, plural pixel electrodes arranged in a matrix on a second substrate, a counter electrode provided on one of first substrate and the second substrate and plural switching elements connected to the respective plural pixel electrodes, a display drive control unit for driving the liquid crystal disposed between each of the pixel electrodes and the counter electrode, a lighting unit having LEDs emitting light of respective red, green and blue colors, and a lighting device control unit for making each LED of color perform time-division light emission in synchronization with the switching of each of the switching elements.

US-6,069,676 discloses a sequential color display device. Red, green and blue light sources, and a shutter are provided. Photosensors are provided for detecting the luminance of each of the light sources. A controller is provided for sequentially operating each of the light sources, the shutter, and the photosensor in synchronism with each other at regular intervals. A luminance control circuit is provided for comparing a luminance detected by the photosensor with a reference value and for controlling the luminance of each of the light sources based on the comparison so as to keep a color balance of the light emitted from the color display device.

US-2002/0113192 A discloses a method and apparatus for illuminating an object with white light, in which method the object is illuminated using lights of at least two different colours. The intensities of the lights are measured and then the intensity of illumination provided by means of a light of a single colour is adjusted on the basis of the measured intensities of illumination provided by means of at least two different colours to improve the white balance of the object's illumination.

US-5,724,064 discloses a high resolution, high brightness light emitting diode display. JP-2000 111871 A discloses a color liquid crystal display device.

### SUMMARY OF THE INVENTION

The invention is defined by the subject-matter of the appended independent claims. The dependent claims are directed to advantageous embodiments.

### ADVANTAGES OF THE INVENTION

Advantageously, it is provided an adjustment method of a display device and display device enabling a white balance adjustment to be made with ease even when there are fluctuations in emission characteristics of LEDs. Advantageously, current consumption is reduced when such a white balance adjustment is made.

Advantageously, emission of an LED of each color is controlled during a unit emission period using a PWM signal, and a duty ratio of the PWM signal for the LED of each color is stored in a storage such that the white balance falls within an allowable range. Further advantageously, rough luminance adjustment is first made by storing a minimum voltage value for each color when a luminance higher than a target is obtained in a state where the duty ratio is maximum, and fine luminance adjustment is then made by varying the duty ratio of the PWM signal while applying the stored applied voltage of fixed value, whereby current consumption can be reduced, in addition to the fact that the white balance is adjusted with excellence.

### Brief Description of Drawings

FIG.1 is a block diagram illustrating a configuration of an LED driving device of an embodiment;
FIG.2 is a diagram showing minimum voltage values required to obtain a desired luminance in an LED of each color;
FIG.3 is a block diagram illustrating a configuration of a driving voltage setting device according to the embodiment;
FIG. 4 is a flowchart to explain processing for setting an applied voltage and a duty ratio in the driving voltage setting device;
FIG.5 is a flowchart to explain processing for setting a duty ratio to obtain the desired white balance;
FIG.6 is a chromaticity spatial diagram to explain the processing for setting a duty ratio to obtain the desired white balance; and
FIG. 7 is a waveform diagram to explain the operation of the LED driving device.

### Best Mode for Carrying Out the Invention

An embodiment of the present invention will specifically be described below with reference to accompanying drawings.

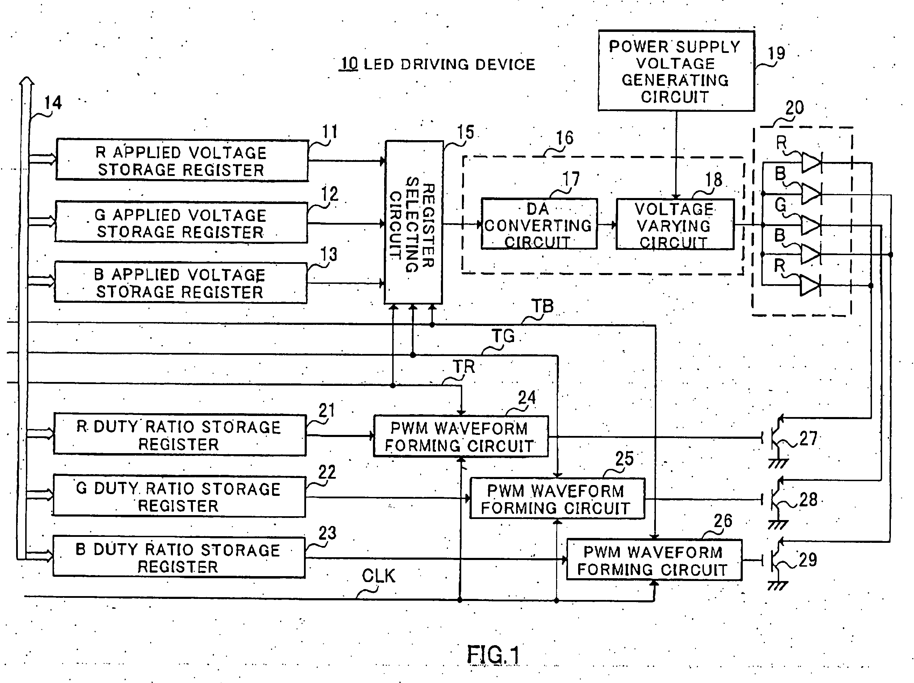

In FIG.1, "10" denotes an LED driving device as a whole. LED driving device 10 is provided in a liquid crystal display device, and drives LEDs of three colors, R, G and B, provided on the back face of a liquid crystal panel. Further, this embodiment describes the case of applying the present invention to a liquid crystal display device of field sequential system, as an example.

LED driving device 10 has R (red) applied voltage storage register 11, G (green) applied voltage storage register 12 and B (blue) applied voltage storage register 13. Each of the registers 11, 12 and 13 stores voltage values to apply to the R, G, or B LED, respectively. Each of the registers 11, 12 and 13 is connected to storage value setting bus 14, and applied voltage values for the LED of each color are stored in each of the registers 11, 12 and 13 via storage value setting bus 14 when a product of LED driving device 10 is shipped.

The applied voltage value for the LED of each color output from each of the registers 11, 12 and 13 is input to register selecting circuit 15. Register selecting circuit 15 further receives as its inputs a red-LED emission timing signal TR, green-LED emission timing signal TG, and blue-LED emission timing signal TB, and based on the emission timing signal, selects either the applied voltage value for R, G or B to output.

For example, when the red-LED emission timing signal TR has a logic value of "1", and each of the green-LED emission timing signal TG and blue-LED emission timing signal TB has a logic value of "0", the circuit 15 selects the applied voltage value stored in R applied voltage storage register 11. In the case of this embodiment, since display is performed in the field sequential system, for example, when the field frequency is assumed to be 65Hz, the LED of each color is lighted sequentially with the three-time frequency, 195Hz. In other words, register selecting circuit 15 selects and outputs voltage values stored in R applied voltage storage register 11, G applied voltage storage register 12 and B applied voltage storage register 13 in turn at intervals of about 5mS .

The applied voltage value selected by register selecting circuit 15 is converted into an analog value by digital analog (DA) converting circuit 17 in applied voltage forming circuit 16, and then output to voltage varying circuit 18. Voltage varying section 18 converts a voltage generated in power supply voltage generating circuit 19 into a voltage corresponding to an analog value input from digital analog converting circuit 17, and supplies the voltage to LED unit 20.

Thus, LED driving device 10 has the registers 11, 12 and 13 that store voltage values to apply to LEDs of respective colors, and converts a voltage generated in power supply voltage generating circuit 19 into a value stored in the register 11, 12 or 13 to supply to a corresponding one of the LEDs. By this means, it is possible to reduce power consumption as compared with the case of applying the same voltage to the LED of each color.

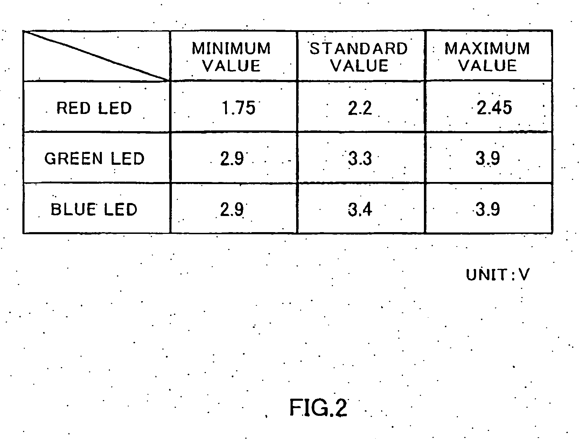

FIG.2 shows minimum applied voltage values (hereinafter referred to as minimum emission voltages) required to obtain a desired luminance in an LED of each color. As can be seen from the figure, minimum emission voltages of the green LED and blue LED are almost the same, while minimum emission voltages of the red LED are lower than those minimum emission voltages.

Applied voltage storage registers 11, 12 and 13 of LED driving device 10 store minimum emission voltage values of the LEDs of respective colors. Among the stored minimum emission voltage values, values of the red LED are actually lower than values of the green LED and blue LED. In other words, it is possible to apply a minimum voltage required for each of the LEDs, and it is thus possible to reduce current consumption.

Further, as can be seen from FIG.2, even in the LED of each color, fluctuations arise in minimum emission voltage. For example, the minimum emission voltage fluctuates in a range of 1.75V to 2.45V in the red LED, while fluctuating in a range of 2.9V to 3.9V in the green LED and blue LED. The fluctuations in minimum emission voltage are due to fluctuations in individual product caused by LED manufacturing.

In this embodiment, not only setting applied voltages for the red LED lower than applied voltages for the green and blue LEDs, applied voltages in consideration of fluctuations in minimum emission voltage among individual products are stored in the registers 11, 12 and 13 for respective colors. It is thereby possible to obtain a desired luminance of the LED of each color while reducing power consumption. Applied voltage values are stored in the registers 11, 12 and 13 for respective colors via storage value setting bus 14, as described later.

Referring to FIG.1 again, a configuration of LED driving device 10 will be described below. LED driving device 10 has R duty ratio storage register 21, G duty ratio storage register 22 and B duty ratio storage register 23. Each of the registers 21, 22 and 23 stores duty ratio data of PWM signal to perform PWM control on the LED of each color, R, G, or B, respectively. Each of the registers 21, 22 and 23 is connected to storage value setting bus 14, and the duty ratio data for the LED of each color is stored in each of the registers 21, 22 and 23 via storage value setting bus 14 when the product of LED driving device 10 is shipped.

The duty ratio data for the LED of each color output from each of the registers 21, 22 and 23 is output to PWM waveform forming circuit 24, 25 or 26, respectively. Each of PWM waveform forming circuits 24, 25 and 26 forms a PWM waveform corresponding to the duty ratio data in synchronization with a clock signal CLK.

PWM waveform forming circuit 24, 25 or 26 outputs a PWM waveform to the base of transistor 27, 28 or 29 based on the red-LED emission timing signal TR, green-LED emission timing signal TG, or blue-LED emission timing signal TB, respectively. In each of transistors 27, 28 and 29, the collector is connected to an output terminal of the LED of R, G or B, while the emitter is grounded, respectively.

By this means, during an emission period of the red LED, only the red-LED emission timing signal TR has a logic value of "1", a PWM signal is only output from PWM waveform forming circuit 24 provided for the red LED, the current corresponding to the PWM signal flows into the red LED, and the red LED emits light. Similarly, during an emission period of the green LED, only the green-LED emission timing signal TG has a logic value of "1", a PWM signal is only output from PWM waveform forming circuit 25 provided for the green LED, the current corresponding to the PWM signal flows into the green LED, and the green LED emits light. During an emission period of the blue LED, only the blue-LED emission timing signal TB has a logic value of "1", a PWM signal is only output from PWM waveform forming circuit 26 provided for the blue LED, the current corresponding to the PWM signal flows into the blue LED, and the blue LED emits light.

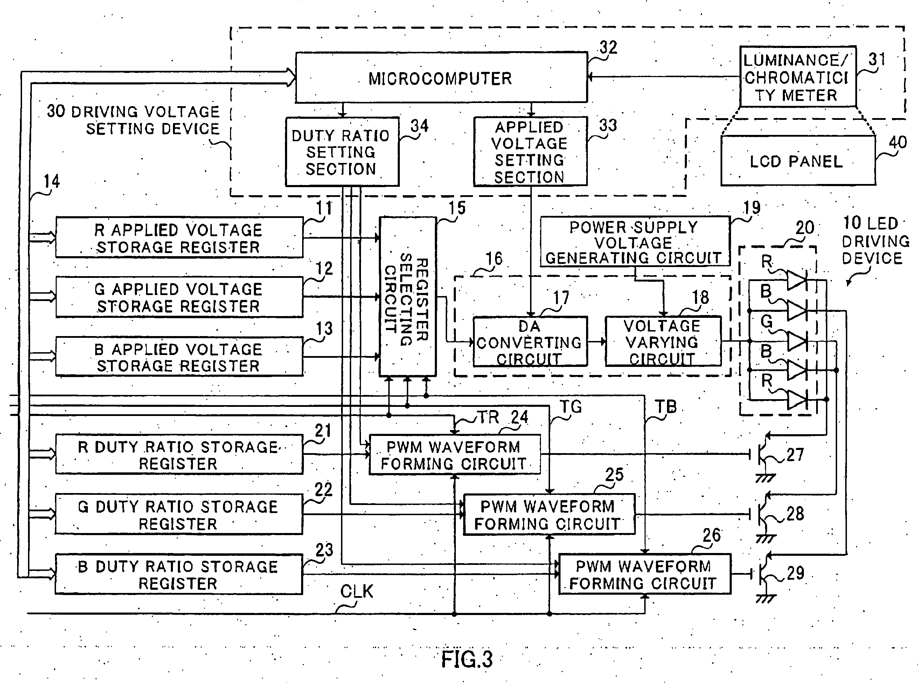

FIG.3 illustrates a configuration of driving voltage setting device 30 for setting voltage values to store in applied voltage storage registers 11, 12 and 13 for respective colors. In addition, driving voltage setting device 30 has the configuration capable of obtaining duty ratio data for the LED of each color to store in duty ratio storage register 21, 22 or 23, as well as voltage values for the LED of each color to store in applied voltage storage register 11, 12 or 13.

Driving voltage setting device 30 has luminance/chromaticity meter 31 to measure the luminance and chromaticity of transmission light from the LCD panel. In addition, the light emitted from LED unit 20 is incident on luminance/chromaticity meter 31 via a light guide plate (not shown) and LCD panel 40. The predetermined voltage is applied to the liquid crystal at each pixel position from an LCD driving circuit (not shown) at predetermined timing to drive the liquid crystal in open or close, whereby LCD panel 40 passes or shields the light emitted from the LED. In addition, it is assumed that LED unit 20, the light guide plate and LCD panel 40 are assembled in the same way as in shipment of the product.

The data of luminance and chromaticity obtained from luminance/chromaticity meter 31 is output to microcomputer 32. Driving voltage setting device 30 has applied voltage setting section 33 and duty ratio setting section 34, and a voltage value set in applied voltage setting section 33 is output to DA converting circuit 17 of LED driving device 10, while the duty ratio data set in duty ratio setting section 34 is output to PWM waveform forming circuits 24, 25 and 26. The set voltage value and set duty ratio are designated from microcomputer 32. In other words, the microcomputer recognizes the set voltage value and duty ratio.

Microcomputer 32 judges whether the luminance and chromaticity meet respective desired values beforehand set, and when the desired values are met, writes the voltage value applied at this point in applied voltage storage register 11, 12 or 13, and further writes the duty ratio in duty ratio storage register 21, 22 or 23, via storage value setting bus 14. In other words, microcomputer 32 has the function as means for writing storage data in applied voltage storage registers 11, 12 and 13 and in duty ratio storage registers 21, 22 and 23.

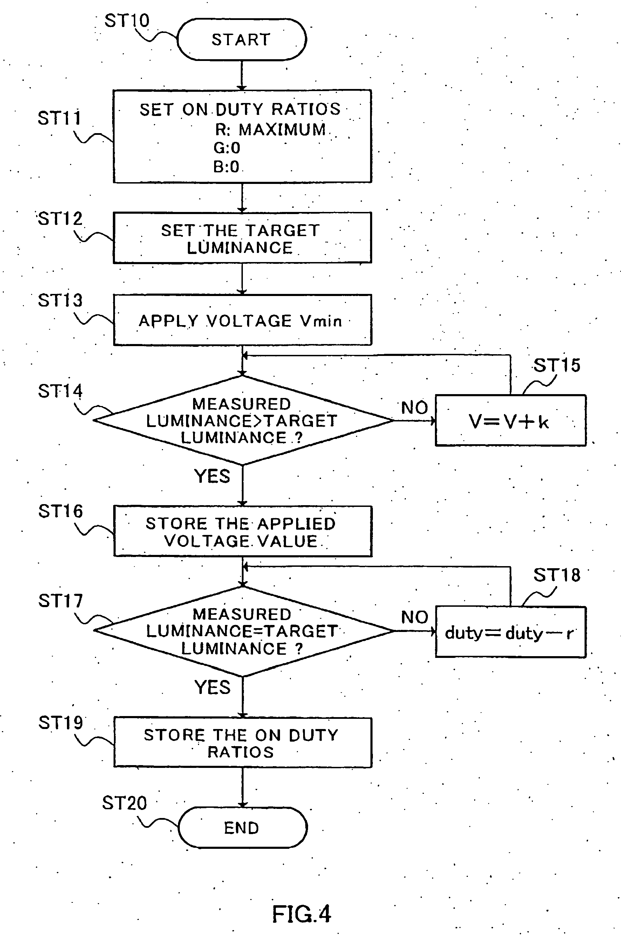

Referring to FIG.4, processing will specifically be described below for driving voltage setting device 30 to record applied voltage values (minimum emission voltages) in applied voltage storage registers 11, 12 and 13 for respective colors and further record the duty ratio data in duty ratio storage registers 21, 22 and 23.

Driving voltage setting device 30 starts the processing in step ST10, and in the subsequent step, ST11, sets duty ratios in duty ratio setting section 34. Since the case of FIG.4 shows processing for setting a voltage to apply to the red LED, the setting device 30 sets the ON duty ratio of the red LED at a maximum value, while setting ON duty ratios of the green and blue LEDs at zero. In other words, PWM waveform forming circuit 24 is given data with the ON duty ratio of the maximum value, while PWM waveform forming circuits 25 and 26 are given data with the ON duty ratio of "0". In step ST12, microcomputer 32 sets a target luminance.

In step ST13, applied voltage setting section 33 sets a minimum applied voltage value Vmin (for example, 1.5V), and voltage varying circuit 18 converts the voltage generated in power supply voltage generating circuit 19 into the set voltage to apply to LED unit 20. At this point, since only the red PWM waveform forming circuit 24 outputs a PWM signal with the maximum ON duty ratio, the red LED is only in a state for enabling light emission.

In step ST14, microcomputer 32 judges whether or not the measured luminance obtained by luminance/chromaticity meter 31 is greater than the target luminance. When the measured luminance is less than the target luminance, microcomputer 32 shifts to the processing of step S15, increases a set applied voltage in applied voltage setting section 33 by k (for example, 0.1V), and makes the judgment in step ST14 again.

A positive result obtained in step ST14 means that the minimum voltage required to obtain a desired luminance is currently being applied to the red LED, and the processing flow shifts to step ST16 where microcomputer 32 writes the voltage value currently set in applied voltage setting section 33 in R applied voltage storage register 11. Thus, the minimum emission voltage value required for the red LED to obtain a desired luminance is stored in R applied voltage storage register 11.

In the subsequent step, ST17, microcomputer 32 judges whether or not the measured luminance agrees with the target luminance. When agreement is not obtained, microcomputer 32 shifts to step ST18, decreases the ON duty ratio set in duty ratio setting section 32 by r, and returns to step ST17.

A positive result obtained in step ST17 means that it is possible to cause the red LED to emit light with the desired luminance using the PWM signal with the duty ratio currently set in duty ratio setting section 34, and the processing flow shifts to step ST19 where microcomputer 32 writes the duty ratio currently set in duty ratio setting section 34 in R duty ratio storage register 21. Thus, the duty ratio for the red LED to obtain the desired luminance is stored in R duty ratio storage register 21.

In other words, the processing of steps ST17 to STi9 indicates that the duty ratio is set to perform fine luminance control using the PWM signal so as to bring the luminance close to the target luminance after setting in steps ST14 to ST16 the minimum applied voltage enabling the target luminance to be obtained. In the subsequent step, ST20, driving voltage setting device 30 finishes the processing for writing data in R applied voltage storage register 11 and R duty ratio storage register 21.

In addition, herein described is the processing for writing data in R applied voltage storage register 11 and R duty ratio storage register 21, and similar procedures are carried out to perform processing for writing data in G and B applied voltage storage registers 12 and 13 and G and B duty ratio storage registers 22 and 23.

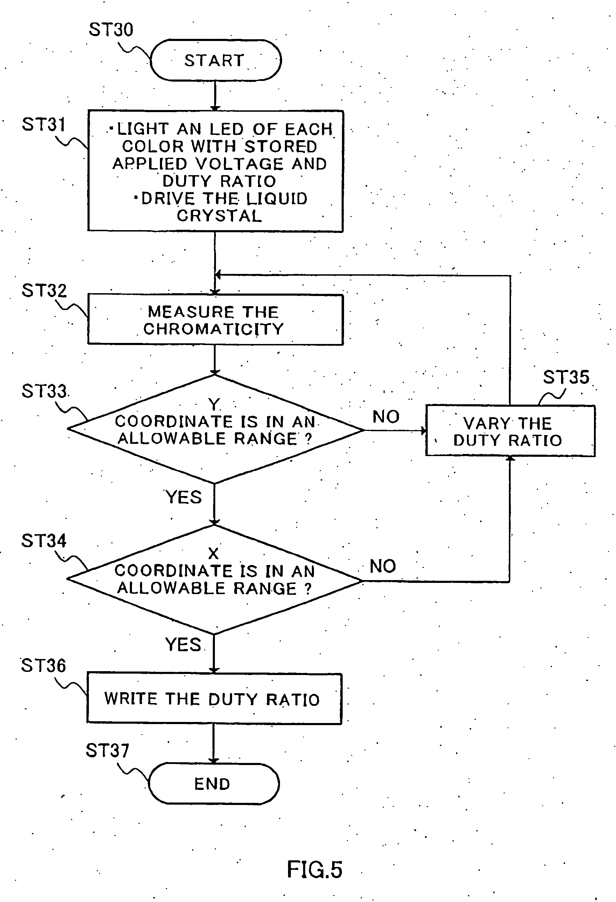

Referring to FIG.5, procedures will be described below to store in the registers 21, 22 and 23 duty ratios for respective colors to obtain the desired white balance.

Driving voltage setting device 30 starts white balance adjustment processing in step ST30, and in the subsequent step, ST31, lights the LEDs of respective colors sequentially using applied voltages stored in applied voltage storage registers 11, 12 and 13 and PWM signals with duty ratios stored in duty ratio storage registers 21, 22 and 23, while driving LCD panel 40 using the LCD driving circuit (not shown).

Actually, LED driving device 10 applies voltages for the LEDs of respective colors stored in applied voltage storage registers 11, 12 and 13 sequentially to LED unit 20, and in synchronization with the voltage application, PWM waveform forming circuits 24, 25 and 26 form PWM signals for the LEDs of respective colors corresponding to the duty ratios stored in duty ratio storage registers 21, 22 and 23.

In other words, in step ST31 is performed actual LED driving and LCD driving in the field sequential system. It is herein assumed that data stored in applied voltage storage registers 11, 12 and 13 and duty ratio storage registers 21, 22 and 23 is data set as shown in FIG.4.

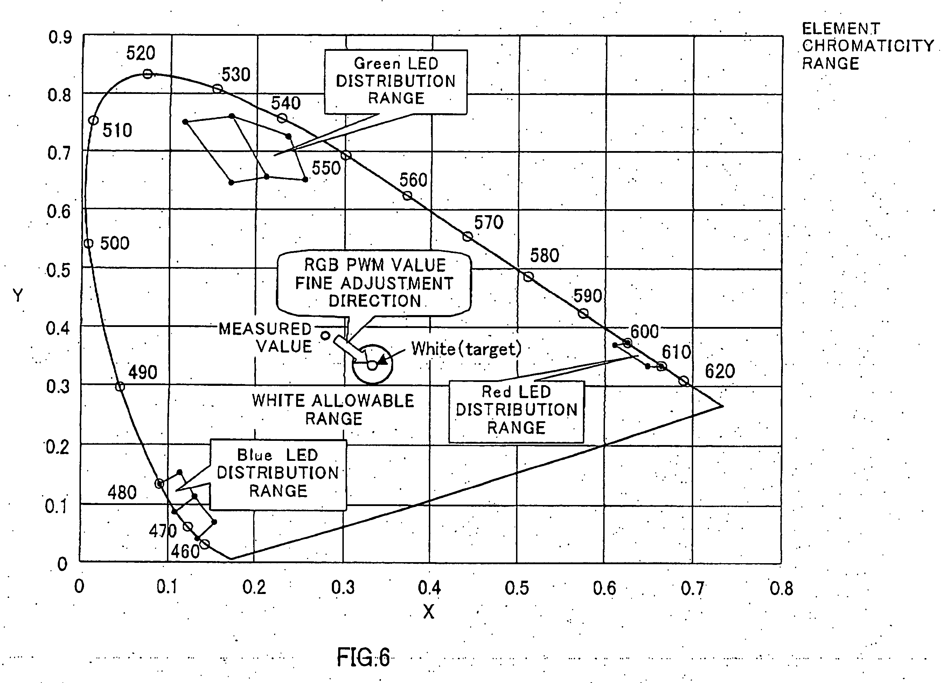

In step S32, luminance/chromaticity meter 31 measures the chromaticity of a display color. FIG.6 shows measured degrees of chromaticity plotted in the chromaticity space. Then, microcomputer 32 calculates a difference between the measured chromaticity and a target value of the white balance, and duty ratio setting section 34 corrects duty ratios to set corresponding to the difference to supply to PWM waveform forming circuits 24, 25 and 26. Microcomputer 32 is capable of reading out duty ratios for respective colors stored in duty ratio storage registers 21, 22 and 23, and based on the read duty ratios for respective colors and the difference between the measured chromaticity and target value of the white balance, designates the duty ratios for respective colors to next set in duty ratio setting section 34. By this means, the duty ratios for respective colors are set at values such that the target white balance is obtained.

Specifically, it is first judged in step ST33 whether or not the Y coordinate of the measured chromaticity is within a white allowable range as shown in FIG.6, and it is further judged in step ST34 whether or not the X coordinate of the measured chromaticity is within the white allowable range as shown in FIG. 6. When a negative result is obtained in either step ST33 or step ST34, the processing flow shifts to step ST35, and duty ratio setting section 34 corrects the duty ratio.

The correction of the duty ratio is made based on the difference in direction and scale between a target point of the white balance and the measured chromaticity. In the case of this embodiment, microcomputer 32 considers a distribution range of chromaticity of the LED of each color, and corrects the duty ratio of the PWM signal for the LED of each color. For example, the amount of the difference is allocated in proportion to the amount of correction of the duty ratio for the LED of each color in consideration of the distribution range of chromaticity of the LED of each color, whereby it is possible to find the duty ratio such that the white balance falls within the allowable range promptly in a small number of corrections.

For example, as shown in FIG. 6, a case is considered where the Y coordinate of a measured value is larger than that of the target point, and that the X coordinate of the measured value is smaller than that of the target point. Respective distribution ranges of the LEDs of colors, R, G and B, in chromaticity space are generally as shown in FIG.6. Therefore, in order to decrease the Y component and increase the X component to bring the white balance close to the target point, for example, the red ON duty ratio is increased, while the green ON duty ratio is decreased.

By thus setting ON duty ratios in proportional allocation as described below, it is possible to find respective duty ratios for the colors such that the target white balance is obtained a small number of settings.

Obtaining positive results in both steps ST33 and ST34 mean that the white balance is in the white allowable range, and therefore, driving voltage setting device 30 shifts to step ST36, stores duty ratios for red, green and blue currently set in duty ratio setting section 34 respectively in duty ratio storage registers 21, 22 and 23, and finishes the white balance adjustment processing in the subsequent step, ST37.

Thus, driving voltage setting device 30 starts with the duty ratio such that a desired luminance is obtained on the LED of each of colors, R, G and B, independently, measures the white balance of the actual display color, corrects respective duty ratios for the colors corresponding to the measured values, while searching for duty ratios such that the desired white balance is obtained, and stores respective duty ratios for the colors at the time the desired white balance is obtained in corresponding duty ratio storage registers 21, 22 and 23.

In this way, driving voltage setting device 30 corrects the duty ratio for each color, thereby makes an adjustment to the white balance, and therefore, is capable of adjusting the white balance finely with ease. Further, by storing duty ratios to adjust the white balance in writable registers 21, 22 and 23, it is possible to write duty ratios specific to each product while actually measuring the chromaticity of the product. Therefore, even when there are fluctuations in LED, light guide plate and LCD panel for each product, it is possible to obtain the desired white balance in each product.

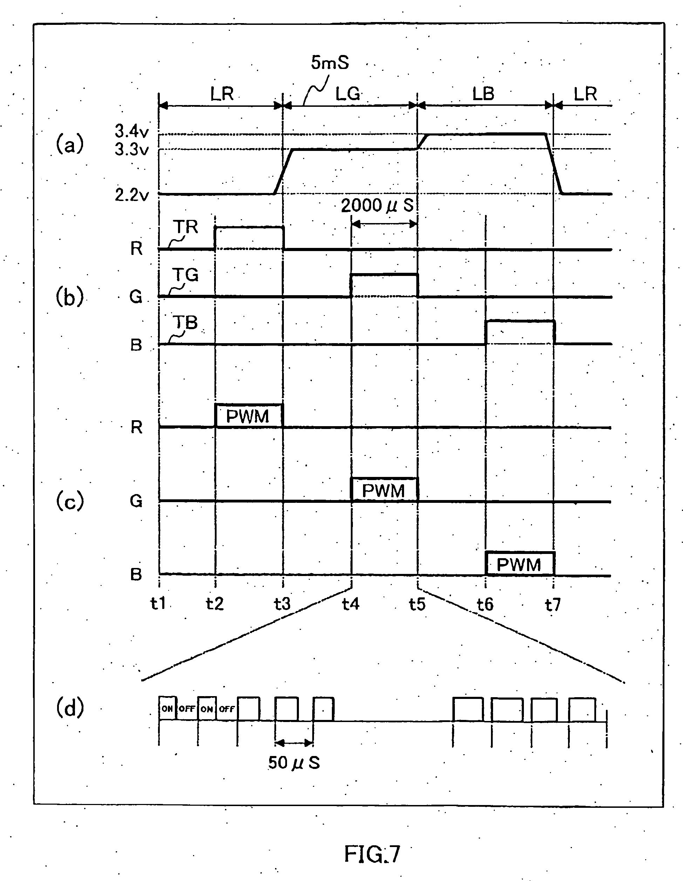

The operation of LED driving device 10 of this embodiment will be described below with reference to FIG. 7. In LED driving device 10, in an red-LED emission period LR, register selecting circuit 15 first selects an output of R applied voltage storage register 11 among from outputs of applied voltage storage registers 11, 12 and 13, and voltage varying circuit 18 forms a voltage of 2.2V corresponding to the output of R applied voltage storage register 11, and supplies the voltage of 2.2V to LED unit 20 as shown in FIG.7(a).

When the red-LED emission timing signal TR rises at time t2 during the red-LED emission period LR, PWM waveform forming circuit 24 outputs a PWM signal with the duty ratio stored in R duty ratio storage register 21 to transistor 27, and thereby the red LED emits light in the luminance corresponding to the PWM signal. Then, when the red-LED emission timing signal TR falls at time t3, the output from PWM waveform forming circuit 24 is halted, and register selecting circuit 15 selects an output of G applied voltage storage register 12, substituting for the output of R applied voltage storage register 11.

By this means, in a green-LED emission period LG, LED driving device 10 forms a voltage of 3.3V in voltage varying circuit 18 corresponding to data of G applied voltage storage register 12, and supplies the voltage of 3. 3V to LED unit 20. When the green-LED emission timing signal TG rises at time t4 during the green-LED emission period LG, PWM waveform forming circuit 25 outputs a PWM signal with the duty ratio stored in G duty ratio storage register 22 to transistor 28, and thereby the green LED emits light in the luminance corresponding to the PWM signal. Then, when the green-LED emission timing signal TG falls at time t5, the output from PWM waveform forming circuit 25 is halted, and register selecting circuit 15 selects an output of B applied voltage storage register 13, substituting for the output of G applied voltage storage register 12.

By this means, in a blue-LED emission period LB, LED driving device 10 forms a voltage of 3.4V in voltage varying circuit 18 corresponding to data of B applied voltage storage register 13, and supplies the voltage of 3. 4V to LED unit 20. When the blue-LED emission timing signal TB rises at time t6 during the blue-LED emission period LB, PWM waveform forming circuit 26 outputs a PWM signal with the duty ratio stored in B duty ratio storage register 23 to transistor 29, and thereby the blue LED emits light in the luminance corresponding to the PWM signal. Then, when the blue-LED emission timing signal TB falls at time t7, the output from PWM waveform forming circuit 26 is halted, and register selecting circuit 15 selects an output of R applied voltage storage register 11, substituting for the output of B applied voltage storage register 13.

Thereafter, in the same way as the foregoing, repeated are the red-LED emission period LR, green-LED emission period LG and blue-LED emission period LB, whereby color display is carried out in the field sequential system.

In addition, in the case of this embodiment, each of the LED emission periods LR, LG and LB is set at about 5mS, and the PWM signal output period for each color is set at about µ s. Further, a waveform of the PWM signal has a unit cycle of 50µ s, and the duty ratio in the unit cycle is stored in each of the duty ratio storage registers 21 to 23. In the case of this embodiment, duty ratios of eight bits (=256 different ratios) are stored in each of the duty ratio storage registers 21 to 23.

Thus, according to this embodiment, the LED of each of colors, red, green and blue, undergoes PWM control independently during a unit emission period to emit light, luminance/chromaticity meter 31 measures the chromaticity of the light emission, a difference is calculated between the measured value and target white balance value, the duty ratio for the LED of each of the colors is corrected corresponding to the difference to light the LED of each of the colors again, and the duty ratio for the LED of each of the colors such that the difference falls within a predetermined allowable range is stored in the duty ratio storage register 21, 22 or 23. It is thus possible to implement an adjustment method of a display device and the display device capable of making a white balance adjustment readily and finely even when there are fluctuations in emission characteristics of LED and LCD panel 40.

Further, rough luminance adjustment is first made by storing a minimum voltage value for each color when a luminance higher than a target is obtained in a state where the duty ratio is maximum, and fine luminance adjustment is then made by varying the duty ratio of the PWM signal while applying the stored applied voltage of fixed value, whereby current consumption can be reduced, in addition to the fact that white balance is adjusted with excellence.

In addition, in the aforementioned embodiment, for simplicity in drawings and descriptions, LED unit 20 is comprised of two red LEDs, two blue LEDs and one green LED, but the present invention is not limited to such the number of the LED of each color. Further, any number is available as the number of LED units 20, and it may be possible to set the driving voltage and duty ratio of an LED of each color independently for each of the LED units to store in memory.

Moreover, it may be possible that a variable voltage is applied independently to each of LEDs of the same color, the luminance is detected independently on each of LEDs of the same color, a minimum applied voltage value when a luminance higher than a desired value is detected is set as a driving voltage value on each of LEDs of the same color and stored in applied voltage storage register 11, 12 or 13, and that each of LEDs is driven with the voltage value. In this way, even when there are fluctuations in driving voltage required to obtain the desired luminance between LEDs of the same color, it is possible to drive each of the LEDs of the same color with the minimum driving voltage corresponding to the fluctuations, and thus, current consumption can further be reduced.

Similarly, it may be possible that each of LEDs of the same color is controlled using the PWM signal with a different duty ratio, the duty ratio for each of the LEDs of the same color when a desired luminance and white balance is detected is stored independently in duty ratio storage register 21, 22 or 23, and that each of the LEDs undergoes PWM control using the duty ratio. In this way, even when there are fluctuations in duty ratio required to obtain the desired luminance and white balance between LEDs of the same color, each of the LEDs can be controlled in PWM using the duty ratio corresponding to the fluctuations, and it is thereby possible to make a finer luminance adjustment and white balance adjustment.

Further, the above-mentioned embodiment describes the case of using a liquid crystal display device in the field sequential system, but the present invention is not limited to such a case and widely applied to display devices to perform color display using LEDs of three colors, R, G and B. Furthermore, the above-mentioned embodiment describes the case of applying the independent voltage for each color to an LED of each color, but the present invention is not limited to such a case and enables the same effects to be obtained also in the case of applying the same voltage to the LED of each color.

The present invention is not limited to the above-mentioned embodiment, and is capable of being carried into practice with various modifications thereof.

An aspect of an adj ustment method of a display device of the present invention includes an LED emission step of performing PWM control independently on an LED of each of colors, red, green and blue, in a unit emission period to cause the LED to emit light, a measuring step of measuring chromaticity of the light, a calculating step of calculating a difference between a measured value obtained in the measuring step and a target white balance value, a correcting step of correcting a duty ratio of a PWM signal on the LED of each of colors in the LED emission step corresponding to the difference obtained in the calculating step, and a duty ratio storing step of storing a duty ratio for the LED of each of colors in a storage when the difference calculated in the calculating step falls within a predetermined allowable range.

According to this method, emission in a unit emission period of the LED of each of colors is controlled using the PWM signal, while storing in the storage the duty ratio of the PWM signal for the LED of each of colors such that the white balance falls within an allowable range. Therefore, even when there are fluctuations between LEDs of the colors due to individual differences, it is possible to make a display adjustment with ease such that the white balance falls within an allowable range.

In another aspect of the adjustment method of a display device of the present invention, the adjustment of the display device is made in such a state that an LCD panel is attached to a front face of the LED and that the LCD panel is driven.

According to this method, even when there are fluctuations between LCD panels due to individual product differences, it is possible to absorb the fluctuations and bring the white balance into an allowable range.

In still another aspect of the adjustment method of a display device of the present invention, in the correcting step, the duty ratio of the PWM signal for the LED of each of colors is corrected in consideration of a distribution range of the chromaticity of the LED of each of colors.

According to this method, it is possible to find the duty ratio such that the white balance falls within the allowable range promptly in a small number of corrections. For example, the amount of the difference is allocated in proportion to the amount of correction of the duty ratio for the LED of each of colors in consideration of the distribution range of the chromaticity of the LED of each of colors.

In still another aspect of the adjustment method of a display device of the present invention, the duty ratio is corrected independently on LEDs of the same color corresponding to the difference obtained in the calculating step, and independent duty ratios for the LEDs of the same color are stored in the duty ratio storing step.

According to this method, it is possible to adjust the LEDs of the same color using independent PWM signals, and it is thereby possible to execute finer white balance adjustment processing than in the case of performing PWM control on the LEDs of the same color collectively using the same PWM signal.

An aspect of a display device of the present invention adopts a configuration having a duty ratio storage which is comprised of writable memory and stores therein a duty ratio to perform PWM control independently on an LED of each of colors, red, green and blue, in a unit emission period, independently for each LED, a PWM controller which forms a PWM signal based on the duty ratio stored in the duty ratio storage independently for each LED to perform PWM control independently on the LED of each of colors in the unit emission period, and a signal line connected to the duty ratio storage to input the duty ratio to the duty ratio storage.

Another aspect of the display device of the present invention adopts a configuration where the duty ratio storage stores the duty ratio provided with a white balance adjustment via the signal line.

According to these configurations, emission in a unit emission period of the LED of each of colors is controlled using the PWM signal, and it is thereby possible to adjust the white balance finely with ease. Further, the duty ratio of the PWM signal for the LED of each of colors is stored in the writable memory, and it is thus possible to write the duty ratio adapted to the display device at any time.

Still another aspect of the display device of the present invention adopts a configuration where the duty ratio storage stores independent duty ratios for LEDs of the same color, and the PWM controller forms independent PWM signals for the LEDs of the same color to perform PWM control independently on the LEDs of the same color in a unit emission control.

According to this configuration, the LEDs of the same color are also controlled in emission using the independent PWM signals, and it is thus possible to perform finer white balance display.

As described above, according to the present invention, emission in a unit emission period of the LED of each of colors is controlled using the PWM signal, while storing in the storage the duty ratio of the PWM signal for the LED of each of colors such that the white balance falls within an allowable range. Therefore, it is possible to implement an adjustment method of a display device and the display device enabling the white balance adjustment to be made finely with ease even when there are fluctuations in emission characteristics of LED and LCD panel.

Further, rough luminance adjustment is first made by storing a minimum voltage value for each color when a luminance higher than a target is obtained in a state where the duty ratio is maximum, and fine luminance adjustment is then made by varying the duty ratio of the PWM signal while applying the stored applied voltage of fixed value, whereby current consumption can be reduced, in addition to the fact that the white balance is adjusted with excellence.

### Industrial Applicability

The present invention is suitable for being applied to, for example, a liquid crystal display device.

### FIG.1 FI.3

- 10: LED DRIVING DEVICE
- 11: R APPLIED VOLTAGE STORAGE REGISTER
- 12: G APPLIED VOLTAGE STORAGE REGISTER
- 13: B APPLIED VOLTAGE STORAGE REGISTER
- 15: REGISTER SELECTING CIRCUIT
- 17: DA CONVERTING CIRCUIT
- 18: VOLTAGE VARYING CIRCUIT
- 19: POWER SUPPLY VOLTAGE GENERATING CIRCUIT
- 21: R DUTY RATIO STORAGE REGISTER
- 22: G DUTY RATIO STORAGE REGISTER
- 23: B DUTY RATIO STORAGE REGISTER
- 24 25 26: PWM WAVEFORM FORMING CIRCUIT

### FIG.2

MINIMUM VALUE STANDARD VALUE MAXIMUM VALUE
RED LED GREEN LED BLUE LED

### UNIT

### FIG.3

- 30: DRIVING VOLTAGE SETTING DEVICE
- 31: LUMINANCE/CHROMATICITY METER
- 32: MICROCOMPUTER
- 33: APPLIED VOLTAGE SETTING SECTION
- 34: DUTY RATIO SETTING SECTION
- 40: LCD PANEL

### FIG. 4

- ST10: START
- ST11: SET ON DUTY RATIOS R: MAXIMUM
- ST12: SET THE TARGET LUMINANCE
- ST13: APPLY VOLTAGE Vmin
- ST14: MEASURED LUMINANCE>TARGET LUMINANCE ?
- ST16: STORE THE APPLIED VOLTAGE VALUE
- ST17: MEASURED LUMINANCE=TARGET LUMINANCE ?
- ST19: STORE THE ON DUTY RATIOS
- ST20: END

### FIG.5

- ST30: START
- ST31: LIGHT AN LED OF EACH COLOR WITH STORED APPLIED VOLTAGE AND DUTY RATIO. DRIVE THE LIQUID CRYSTAL
- ST32: MEASURE THE CHROMATICITY
- ST33: Y COORDINATE IS IN AN ALLOWABLE RANGE ?
- ST34: X COORDINATE IS IN AN ALLOWABLE RANGE ?
- ST35: VARY THE DUTY RATIO
- ST36: WRITE THE DUTY RATIO
- ST37: END

### FIG.6

ELEMENT CHROMATICITY RANGE
Green LED DISTRIBUTION RANGE
Blue LED DISTRIBUTION RANGE
Red LED DISTRIBUTION RANGE
RGB PWM VALUE FINE ADJUSTMENT DIRECTION
WHITE ALLOWABLE RANGE

## Claims

1. An adjustment method of a display device, comprising:
a) an applied voltage setting step of performing a rough luminance adjustment by applying (ST13) an voltage to an LED (20) of one (R) of colors (R, G, B), red (R), green (G) and blue (B), measuring (ST14) an emission luminance of the LED (20) of the one (R) of the colors (R, G, B), increasing (ST15) the applied voltage by voltage steps of k until said measured emission luminance is higher than a target luminance, then stopping the incrementation and storing (ST16) the incremented voltage value in registers;
b) a duty ratio setting step of performing a fine luminance adjustment by fixedly applying the voltage set in the applied voltage setting step to the LED (20) of the one (R) of the colors (R, G, B), measuring (ST17) an emission luminance of the LED (20) of the one (R) of the colors (R, G, B), varying a duty ratio of a PWM signal performing switching control of the LED (20) of the one (R) of the colors (R, G, B) and storing (ST19) a duty ratio in the registers when the target luminance of the one (R) of the colors (R, G, B) is obtained;
c) performing the steps a) and b) for each color of the colors (R, G, B);
d) an LED emission step (ST31) of performing PWM control independently on an LED (20) of each of the colors (R, G, B), red (R), green (G) and blue (B), in a unit emission period to cause the LED (20) to emit light, wherein the applied voltage values and duty ratios stored in the registers are loaded;
e) a measuring step (ST32) of measuring chromaticity of the light;
f) a calculating step (ST33, ST34) of calculating a difference between a measured value obtained in the measuring step (ST32) and a target white balance value;
g) a PWM signal correcting step (ST35) of correcting a duty ratio of a PWM signal on the LED (20) of each of the colors (R, G, B) in the LED emission step (ST31) corresponding to the difference obtained in the calculating step (ST33, ST34); and
h) a duty ratio storing step (ST36) of storing a duty ratio for the LED (20) of each of the colors (R, G, B) in the registers when the difference calculated in the calculating step falls within a predetermined allowable range,
wherein:
the series of the LED emission step (ST31), measuring step (ST32), calculating step (ST33, ST34), PWM signal correcting step (ST35), duty ratio storing step (ST36) provide a duty ratio correcting step of fixedly applying the voltage set in the applied voltage setting step, changing the duty ratio set in the duty ratio setting step, measuring the white balance when the LED (20) of each color (R, G, B) is emitted, and storing (ST36) the duty ratio for each color (R, G, B) when a target white balance is achieved;
the duty ratio of the PWM signal for the LED (20) of each of the colors (R, G, B) is corrected (ST35) in consideration of a distribution range of the chromaticity of the LED (20) of colors (R, G, B); and
the correction of the duty ratio is made based on the difference between a target point of the white balance and the measured chromaticity.

2. The method according to claim 1, wherein an adjustment of the display device is made in such a state that an LCD panel is attached to a front face of the LED (20) and that the LCD panel is driven.

3. The method according to claim 1, wherein the duty ratio is corrected independently on LED (20) of the same color corresponding to the difference obtained in the calculating step (ST33, ST34), and independent duty ratios for the LED (20) of the same color are stored in the duty ratio storing step (ST36).

4. A display device comprising:
LED (20) of colors (R, G, B) red (R), green (G) and blue (B) configured to emit light;
a duty ratio storage (21, 22, 23) which is comprised of writable memory and is configured to store therein a duty ratio to perform PWM control independently on an LED (20) of each of colors (R, G, B), red (R), green (G) and blue (B), in a unit emission period, independently for each LED (20);
a PWM controller (24, 25, 26) configured to form a PWM signal based on the duty ratio stored in the duty ratio storage (21, 22, 23) independently for each LED (20) to perform PWM control independently on the LED (20) of each of colors (R, G, B) in the unit emission period; and
a signal line (14) connected to the duty ratio storage (21, 22, 23) to input the duty ratio to the duty ratio storage (21, 22, 23),
a chromaticity meter (31) configured to measure the chromaticity of the light;
a microcomputer (32) configured to calculate a difference between a measured value obtained from the chromaticity meter (31) and a target white balance value;
wherein the microcomputer (32) is further configured to correct a duty ratio of a PWM signal on the LED (20) of each of colors (R, G, B) in the LED emission period corresponding to the difference calculated by the microcomputer (32), and to store a duty ratio for the LED (20) of each of colors (R, G; B) in the duty ratio storage (21, 22, 23) when the difference calculated by the microcomputer (32) falls within a predetermined allowable range;
**characterized by**:
an applied voltage storage (11, 12, 13) configured to store an applied voltage value for each independent color (R, G, B); wherein:
the microcomputer (32) is further configured to perform a rough luminance adjustment by applying an voltage to an LED (20) of one (R) of colors (R, G, B), red (R), green (G) and blue (B), to measure an emission luminance of the LED (20) of the one (R) of the colors (R, G, B), to increase the applied voltage by voltage steps of k until the measured emission luminance is higher than a target luminance, then stopping the incrementation and to store the incremented voltage in the applied voltage storage (11, 12,13);
the microcomputer (32) is further configured to perform a fine luminance adjustment by fixedly applying the voltage set in the rough luminance adjustment period to the LED (20) of the one (R) of the colors (R, G, B), to measure (ST17) an emission luminance of the LED (20) of the one (R) of the colors (R, G, B), varying a duty ratio of the PWM signal performing switching control of the LED (20) of the one (R) of the colors (R, G, B) and to store a duty ratio in the duty ratio storage (21, 22, 23) when the target luminance of the one (R) of the colors (R, G, B) is obtained;
the microcomputer (32) is further configured to correct the duty ratio of the PWM signal for the LED (20) of each of colors (R, G, B) in consideration of a distribution of the chromaticity of the LED (20) of each of colors (R, G, B); and
the microcomputer (32) is further configured to make the correction of the duty ratio based on the difference between a target point of the white balance and the measured chromaticity.

5. The device according to claim 4, wherein the duty ratio storage (21, 22, 23) is configured to store independent duty ratios for LED (20) of the same color, and the PWM controller (32) is further configured to form independent PWM signals for the LED (20) of the same color to perform PWM control independently on the LED (20) of the same color in a unit emission control.

## Patentansprüche

1. Einstellungsverfahren einer Anzeigevorichtung, das Folgendes umfasst:
a) ein Einstellungsschritt einer angelegten Spannung, um eine grobe Leuchtstärkeeinstellung auszuführen, indem eine Spannung an eine LED (20) einer (R) der folgenden Farben (R, G, B) angelegt wird (ST13): Rot (R), Grün (G) und Blau (B), wobei eine Emissionsleuchtstärke der LED (20) von der einen (R) der Farben (R, G, B) gemessen wird (ST14), die angelegte Spannung um Spannungsschritte von k erhöht wird (ST15), bis die gemessene Emissionsleuchtstärke höher als eine Zielleuchtstärke ist, dann die Erhöhung gestoppt wird und der erhöhte Spannungswert in Registern gespeichert wird (ST16),
b) ein Einstellschritt eines Tastverhältnisses zum Ausführen einer feinen Leuchtstärkeeinstellung durch festes Anlegen der Spannung, die in dem Einstellungsschritt der angelegten Spannung eingestellt ist an die LED (20) der einen (R) der Farben (R, G, B), Messen (ST17) einer Emissionsleuchtstärke der LED (20) der einen (R) der Farben (R, G, B), Variieren eines Tastverhältnisses eines PWM-Signals, das eine Schaltsteuerung der LED (20) der einen (R) der Farben (R, G, B) ausführt, und Speichern (ST19) eines Tastverhältnisses in den Registern, wenn die Zielleuchtstärke der einen (R) der Farben (R, G, B) erhalten wird;
c) Ausführen der Schritte a) und b) für jede der Farben (R, G, B);
d) ein LED-Emissionsschritt (ST31) zum unabhängigen Ausführen einer PWM-Steuerung an einer LED (20) von jeder der folgenden Farben (R, G, B): Rot (R), Grün (G) und Blau (B) in einer Einheitsemissionsperiode, um die LED (20) dazu zu bringen, Licht zu emittieren, wobei die angelegten Spannungswerte und Tastverhältnisse geladen werden, die in den Registern gespeichert sind;
e) ein Messschritt (ST32) zum Messen einer Chromazität des Lichts;
f) ein Berechnungsschritt (ST33, ST34) zum Berechnen einer Differenz zwischen einem gemessenen Wert, der in dem Messschritt (ST32) erhalten wird und einem weißen Zielweißabgleichswert;
g) ein PWM-Signalkorrekturschritt (ST35) zum Korrigieren eines Tastverhältnises eines PWM-Signals an der LED (20) von jeder der Farben (R, G, B) in dem LED-Emissionsschritt (ST31), und zwar entsprechend der Differenz, die in dem Berechnungsschritt (ST33, ST34) erhalten wird; und
h) ein Tastverhältnis-Speicherschritt (ST36) zum Speichern eines Tasterhältnisses für die LED (20) von jeder der Farben (R, G, B) in den Registern, wenn die Differenz, die in dem Berechnungsschritt berechnet wird, innerhalb eines vorbestimmten erlaubten Bereichs fällt,
wobei:
die Reihe der folgenden Schritte: LED-Emissionsschritt (ST31), Messschritt (ST32), Berechnungsschritt (ST33, ST34), PWM-Signalkorrekturschritt (ST35), Tastverhältnis-Speicherschritt (ST36) einen Tastverhältnis-Korrekturschritt der fest angelegten Spannung, die in dem Einstellungsschritt der angelegten Spannung eingestellt wird, das Tastverhältnis verändern, das in dem Tastverhältnis-Einstellungsschritt eingestellt wird, den Weißabgleich messen, wenn die LED (20) jede der Farben (R, G, B) emittiert, und Speichern (ST36) des Tastverhältnisses für jede Farbe (R, G, B), wenn ein Zielweißabgleich erreicht wird;
das Tastverhältnis des PWM-Signals für die LED (20) für jede der Farben (R, G, B) korrigiert wird (ST35), in Anbetracht eines Verteilungsbereichs der Chromatizität der LED (20) der
Farben (R, G, B); und
die Korrektur des Tastverhältnisses erfolgt basierend auf der Differenz zwischen einem Zielpunkt des Weißabgleichs und der gemessenen Chromatizität.

2. Verfahren nach Anspruch 1, wobei eine Einstellung der Anzeigevorrichtung in einem solchen Zustand erfolgt, dass eine LCD-Feld an einer vorderen Fläche der LED (20) angebracht ist und dass die LCD-Feld angetrieben wird.

3. Verfahren nach Anspruch 1, wobei das Tastverhältnis an einer LED (20) derselben Farbe unabhängig korrigiert wird, und zwar entsprechend der Differenz, die in dem Berechnungsschritt (ST33, ST34) erhalten wird, und unabhängige Tastverhältnisse für die LED (20) derselben Farbe werden in dem Tastverhältnis-Speicherschritt (ST36) gespeichert.

4. Anzeigevorrichtung, die Folgendes umfasst:
LED (20) der Farben (R, G, B), Rot (R), Grün (G) und Blau (B) konfiguriert sind, um Licht zu emittieren;
einen Tastverhältnisspeicher (21, 22, 23), welcher aus einem beschreibbaren Speicher besteht und konfiguriert ist, um darin ein Tastverhältnis zu speichern, um unabhängig eine PWM-Steuerung an einer LED (20) von jeder folgenden Farben auszuführen: Rot (R), Grün (G) und Blau (B) in einer Einheitsemissionsperiode, unabhängig für jede LED (20);
eine PWM-Steuerung (24, 25, 26), konfiguriert, um ein PWM-Signal basierend auf dem Tastverhältnis auszubilden, das in dem Tastverhältnisspeicher (21, 22, 23) unabhängig für jede LED (20) gespeichert wird, um eine PWM-Steuerung unabhängig von der LED (20) von jeder Farben (R, G, B) in der Einheitsemissionsperiode auszuführen; und
eine Signallinie (14), die mit dem Tastverhältnisspeicher (21, 22, 23) verbunden ist, um das Tastverhältnis in den Tastverhältnisspeicher (21, 22, 23) zu speichern,
einen Chromatizitätsmesser (31), konfiguriert, um die Chromatizität des Lichts zu messen;
ein Mikrocomputer (32), konfiguriert, um eine Differenz zwischen einem gemessenen Wert zu berechnen, der von dem Chromatizitätsmesser (31) erhalten wird, und einem Zielweißabgleichwert;
wobei der Mikrocomputer (32) weiter konfiguriert ist, um ein Tastverhältnis eines PWM-Signals auf der LED (20) von jeder Farben (R, G, B) in der LED Emissionsperiode zu korrigieren, und zwar entsprechend der Differenz, die durch den Mikrocomputer (32) berechnet wird, und ein Tastverhältnis für die LED (20) von jeder der Farben (R, G, B) in den Tastverhältnisspeicher (21, 22, 23) zu speichern, wenn die Differenz, die durch den Mikrocomputer (32) berechnet wird innerhalb eines vorbestimmten erlaubten Bereichs fällt;
**gekennzeichnet durch**:
einen Speicher einer angelegten Spannung (11, 12, 13), konfiguriert, um einen angelegten Spannungswert für jede unabhängige Farbe (R, G, B) zu speichern;
wobei:
der Mikrocomputer (32) weiter konfiguriert ist, um eine grobe Leuchtstärkeeinstellung **durch** Anlegen einer Spannung an eine LED (20) von einer der folgenden Farben (R, G, B) auszuführen: Rot (R), Grün (G) und Blau (B), um eine Emissionsleuchtstärke der LED (20) von der einen (R) der Farben (R, G, B) zu messen, um die angelegte Spannung um Spannungsschritte von k zu erhöhen, bis die gemessene Emissionsleuchtstärke höher als eine Zielleuchtstärke ist, dann die Erhöhung zu stoppen und die erhöhte Spannung in dem Speicher angelegter Spannung (11, 12, 13) zu speichern;
der Mikrocomputer (32) weiter konfiguriert ist, um eine feine Leuchtstärkeeinstellung **durch** festes Anlegen des Spannungssatzes in der groben Leuchtstärkeeinstellungsperiode an die LED (20) von der einen (R) der Farben (R, G, B) auszuführen, um eine Emissionsleuchtstärke der LED (20) von der einen (R) der Farben (R, G, B) zu messen, ein Tastverhältnis des PWM-Signals zu variieren, das eine Schaltsteuerung der LED (20) von der einen (R) der Farben (R, G, B) ausführt und ein Tastverhältnis in dem Tastverhältnisspeicher (21, 22, 23) zu speichern, wenn die Zielleuchtstärke von der einen (R) der Farben (R, G, B) erhalten wird;
der Mikrocomputer (32) weiter konfiguriert ist, um das Tastverhältnis des PWM-Signals für die LED (20) von jeder der Farben (R, G, B) in Anbetracht einer Verteilung der Chromatizität der Led (20) von jeder Farben (R, G, B) zu korrigieren; und
der Mikrocomputer (32) weiter konfiguriert ist, die Korrektur des Tastverhältnisses basierend auf der Differenz zwischen einem Zielpunkt des Weißabgleichs und der gemessenen Chromatizität auszuführen.

5. Vorrichtung nach Anspruch 4, wobei der Tastverhältnisspeicher (21, 22, 23) konfiguriert ist, um unabhängige Tastverhältnisse für eine LED (20) derselben Farbe zu speichern, und die PWM-Steuerung (32) weiter konfiguriert ist, um unabhängige PWM-Signale für die LED (20) derselben Farbe auszubilden, um eine PWM-Steuerung unabhängig von der LED (20) derselben Farbe in einer Einheitsemissionssteuerung auszuführen.

## Revendications

1. Procédé pour ajuster un dispositif d'affichage, comprenant:
a) une étape de réglage de tension appliquée pour exécuter un ajustement approximatif de la luminance en appliquant (étape 13) une tension à une DEL (20) de l'une (R) des couleurs (R, G, B) rouge (R), vert (G) et bleu (B), en mesurant (étape 14) une luminance d'émission de la DEL (20) de l'une (R) des couleurs (R, G, B), en augmentant (étape 15) la tension appliquée par des degrés de tension de k jusqu'à ce que ladite luminance d'émission mesurée soit supérieure à une luminance cible, et ensuite en arrêtant l'augmentation et en stockant (étape 16) la valeur de tension augmentée dans des registres;
(b) un étape de réglage de rapport de rendement pour exécuter un ajustement fin de la luminance en appliquant de façon fixe la tension réglée lors de l'étape de réglage de la tension appliquée à la DEL (20) de l'une (R) des couleurs (R, G, B), en mesurant (étape 17) une luminance d'émission de la DEL (20) de l'une (R) des couleurs (R, G, B), en modifiant un rapport de rendement d'un signal PWM qui exécute une commande de commutation de la DEL (20) de l'une (R) des couleurs (R, G, B), et en stockant (étape 19) un rapport de rendement dans les registres lorsque la luminance cible de l'une (R) des couleurs (R, G, B) est obtenue;
c) exécuter les étapes a) et b) pour chaque couleur des couleurs (R, G, B);
d) une étape d'émission de DEL (étape 31) pour exécuter une commande PWM de façon indépendante sur une DEL (20) de chacune des couleurs (R, G, B), rouge (R), vert (G) et bleu (B), dans une période d'émission unitaire de manière à entraîner la DEL (20) à émettre de la lumière, dans lequel les valeurs de tension appliquée et les rapports de rendement stockés dans les registres sont chargés;
e) une étape de mesure (étape 32) pour mesurer la chromaticité de la lumière;
f) une étape de calcul (étape 33, étape 34) pour calculer une différence entre une valeur mesurée obtenue lors de l'étape de mesure (étape 32) et une valeur d'équilibre de blanc cible;
g) une étape de correction de signal PWM (étape 35) pour corriger un rapport de rendement d'un signal PWM sur la DEL (20) de chacune des couleurs (R, G, B) lors de l'étape d'émission de DEL (étape 31) correspondant à la différence obtenue lors de l'étape de calcul (étape 33, étape 34); et
h) une étape de stockage de rapport de rendement (étape 36) pour stocker un rapport de rendement pour la DEL (20) de chacune des couleurs (R, G, B) dans les registres lorsque la différence calculée lors de l'étape de calcul tombe à l'intérieur d'une plage acceptable prédéterminée,
dans lequel:
la série d'étapes comprenant l'étape d'émission de DEL (étape 31), l'étape de mesure (étape 32), l'étape de calcul (étape 33, étape 34), l'étape de correction de signal PWM (étape 35) et l'étape de stockage de rapport de rendement (étape 36) exécute une étape de correction du rapport de rendement pour appliquer de façon fixe la tension réglée lors de l'étape de réglage de la tension appliquée, changer le rapport de rendement réglé lors de l'étape de réglage du rapport de rendement, mesurer l'équilibre de blanc lorsque la DEL (20) de chaque couleur (R, G, B) est émise, et stocker (étape 36) le rapport de rendement pour chaque couleur (R, G, B) lorsqu'un équilibre de blanc cible est atteint;
le rapport de rendement du signal PWM pour la DEL (20) de chacune des couleurs (R, G, B) est corrigé (étape 35) en considérant une plage de distribution de la chromaticité de la DEL (20) des couleurs (R, G, B); et
la correction du rapport de rendement est effectuée sur la base de la différence entre un point cible de l'équilibre de blanc et la chromaticité mesurée.

2. Procédé selon la revendication 1, dans lequel un ajustement du dispositif d'affichage est réalisé de telle sorte qu'un panneau LCD soit attaché à une face avant de la DEL (20) et que le panneau LCD soit activé.

3. Procédé selon la revendication 1, dans lequel le rapport de rendement est corrigé de façon indépendante sur la DEL (20) de la même couleur correspondant à la différence obtenue lors de l'étape de calcul (étape 33, étape 34), et des rapports de rendement indépendants pour la DEL (20) de la même couleur sont stockés lors de ladite étape de stockage de rapport de rendement (étape 36).

4. Dispositif d'affichage, comprenant:
une DEL (20) des couleurs (R, G, B), rouge (R), vert (G) et bleu (B), configurée pour émettre de la lumière;
un dispositif de stockage de rapport de rendement (21, 22, 23) qui est constitué d'une mémoire inscriptible et qui est configuré pour stocker dans celle-ci un rapport de rendement de manière à exécuter une commande PWM de façon indépendante sur une DEL (20) de chacune des couleurs (R, G, B), rouge (R), vert (G) et bleu (B), dans une période d'émission unitaire, de façon indépendante pour chaque DEL (20);
un dispositif de commande PWM (24, 25, 26) configuré pour former un signal PWM sur la base du rapport de rendement qui est stocké dans le dispositif de stockage de rapport de rendement (21, 22, 23) de façon indépendante pour chaque DEL (20) de manière à exécuter une commande PWM de façon indépendante sur la DEL (20) de chaque couleur (R, G, B) dans la période d'émission unitaire; et
une ligne de signal (14) connectée au dispositif de stockage de rapport de rendement (21, 22, 23) pour entrer le rapport de rendement dans le dispositif de stockage de rapport de rendement (21, 22, 23),
un dispositif de mesure de chromaticité (31) configuré pour mesurer la chromaticité de la lumière;
un micro-ordinateur (32) configuré pour calculer une différence entre une valeur mesurée obtenue par le dispositif de mesure de chromaticité (31) et une valeur d'équilibre de blanc cible;
dans lequel le micro-ordinateur (32) est en outre configuré pour corriger un rapport de rendement d'un signal PWM sur la DEL (20) de chacune des couleurs (R, G, B) dans la période d'émission de DEL qui correspond à la différence calculée par le micro-ordinateur (32), et pour stocker un rapport de rendement pour la DEL (20) de chacune des couleurs (R, G, B) dans le dispositif de stockage de rapport de rendement (21, 22, 23) lorsque la différence calculée par le micro-ordinateur (32) tombe à l'intérieur d'une plage acceptable prédéterminée;
**caractérisé par**:
un dispositif de stockage de tension appliquée (11, 12, 13) qui est configuré pour stocker une valeur de tension appliquée pour chaque couleur indépendante (R, G, B); dans lequel:
le micro-ordinateur (32) est en outre configuré pour exécuter un ajustement approximatif de la luminance en appliquant une tension à une DEL (20) de l'une (R) des couleurs (R, G, B) rouge (R), vert (G) et bleu (B), mesurer une luminance d'émission de la DEL (20) de l'une (R) des couleurs (R, G, B), augmenter la tension appliquée par des degrés de tension de k jusqu'à ce que la luminance d'émission mesurée soit supérieure à une luminance cible, et ensuite arrêter l'augmentation et stocker la valeur de tension augmentée dans le dispositif de stockage de tension appliquée (11, 12, 13);
le micro-ordinateur (32) est en outre configuré pour exécuter un ajustement fin de la luminance en appliquant de façon fixe la tension réglée lors de l'étape de réglage de la tension appliquée à la DEL (20) de l'une (R) des couleurs (R, G, B), mesurer (étape 17) une luminance d'émission de la DEL (20) de l'une (R) des couleurs (R, G, B), modifier un rapport de rendement du signal PWM qui exécute une commande de commutation de la DEL (20) de l'une (R) des couleurs (R, G, B), et stocker un rapport de rendement dans le dispositif de stockage de rapport de rendement (21, 22, 23) lorsque la luminance cible de l'une (R) des couleurs (R, G, B) est obtenue;
le micro-ordinateur (32) est en outre configuré pour corriger le rapport de rendement du signal PWM pour la DEL (20) de chacune des couleurs (R, G, B) en considérant une distribution de la chromaticité de la DEL (20) de chacune des couleurs (R, G, B); et
le micro-ordinateur (32) est en outre configuré pour effectuer une correction du rapport de rendement sur la base de la différence entre un point cible de l'équilibre de blanc et la chromaticité mesurée.

5. Dispositif selon la revendication 4, dans lequel le dispositif de stockage de rapport de rendement (21, 22, 23) est configuré de manière à stocker des rapports de rendement indépendants pour la DEL (20) de la même couleur, et le dispositif de commande PWM (32) est en outre configuré pour former des signaux PWM indépendants pour la DEL (20) de la même couleur de manière à exécuter une commande PWM de façon indépendante sur la DEL (20) de la même couleur dans une commande d'émission unitaire.
